# EUROPEAN PATENT SPECIFICATION

(11) **EP 1 643 090 B1**
(45) Date of publication and mention of the grant of the patent: **28.07.2010**
(21) Application number: 05109000.9
(22) Date of filing: 29.09.2005
(51) Int. Cl.: F01N 3/021, F01N 3/022, F01N 3/031, F01N 9/00, B01D 46/52

(54) **Controlled bypass of a filtration device**
Filtervorrichtung mit gesteuertem Bypass
Dispositif de filtration à exclusion commandée

(30) Priority: 30.09.2004 IT MI20041862
(43) Date of publication of application: 05.04.2006
(73) Proprietor: Colamussi, Arturo, 44100 Ferrara (IT); ARPA - AGENZIA REGIONALE PREVENZIONE E AMBIENTE DELL'EMILIA ROMAGNA, 40139 Bologna (IT)
(72) Inventor: Colamussi, Arturo, 44100 Ferrara (IT)
(74) Representative: Fanzini, Valeriano

(56) References cited:
- EP-A- 0 457 018
- EP-A- 0 575 038
- DE-A1- 2 519 609
- US-A1- 2002 088 214

## Description

The present invention concerns a controlled exclusion filtration device.

The invention also concerns a filtration device in which the filtering element is made from microporous paper, with high surface volume to filter and hold the particulate present in exhaust gases of internal combustion engines such as diesel engines.

The general problem of environmental pollution derives from the presence of substances released into the atmosphere, mainly through human activity (industrial energy production, vehicle exhausts, domestic heating, and the like) .

Amongst the polluting substances produced, in the urban environment, those emitted by internal combustion engines and, amongst these, diesel engines are particularly a cause for concern.

Such substances include the particulate consisting of unburnt carbon, ashes of the lubricating oil and many other substances that can cause discomfort and pathologies, which may even be serious.

The phenomenon of pollution is, moreover, worsened by atmospheric conditions, by the increase in traffic in urban areas and by the increase in the number of vehicles running on diesel engines.

In order to rectify a situation of continuously worsening pollution, various solutions have been proposed that operate according to different principles.

Amongst the filtering systems proposed there are those known as self-regenerating, for example a filter consisting mainly of a device comprising a section containing a catalyst that generates nitrogen dioxide (NO₂), followed by a section consisting of a generally ceramic filter capable of holding the particulate is known.

When such a filter reaches the temperature of 250°C-350°C the NO₂ triggers the combustion of the carbon particles trapped in the filter thus preventing it from progressively clogging up.

The device just described does, however, have some limitations:
- the diesel fuel must not contain sulphur, otherwise the catalyst will be poisoned;
- the operation of the device is linked to high temperatures of the exhaust gases;
- the combustion ashes of the lubricating oil cannot be eliminated by the filter of the particulate that thus progressively clogs up;
- the production of secondary emissions due to the catalyst that constitute a danger to the environment;
- it is not easy to check the continuity of the efficiency of the system over time.

Added to such drawbacks there are the substantial manufacturing and installation costs.

Virtually identical drawbacks are also suffered by intermittent regeneration filters through injection of liquid catalysts, where there is a clogging signal of the particulate filter.

The harmful effect of the pollutants is particularly serious in urban centres, where the exchange of air is low whereas the circulation of vehicles reaches high densities.

DE 251 96 09 A - teaches a device for removing the soot from the exhaust gases from internal-combustion engines, in particular Diesel internal-combustion engines, with which in the diverting way of the exhaust gases a filter is intended, at which the filtered soot at least essentially settles at the surface, is characterized by that the device is provided with mechanisms for the steered burn-off of the soot down in given intervals.

It should be noted that the speed of vehicles in urban traffic is limited by law (50 km/h). From research carried out by the Applicant on a large number of light vehicles (cars and vans) we have been able to find out that the temperature of the exhaust gases is kept relatively low, in the order of 150°C-180°C.

Such a temperature increases at higher speeds like on motorways, dual carriageways and by-passes and on out-of-city roads.

Such behaviour is exploited in the system provided by the Applicant.

The same Applicant has discovered that it is possible to obtain a very high efficiency of filtration through a device comprising a microporous paper filter suitable for holding the particulate present in the exhaust gases of internal combustion engines, operating at temperatures of up to 150°C-180°C above which the filter itself can be damaged.

The main purpose of the present invention is, therefore, that of making an automatic or manual controlled exclusion filtration device when the exhaust gases of the vehicle exceed a predetermined temperature value.

Another purpose of the present invention is that of providing a filter with high surface volume, for particulate, that is particularly efficient in filtration, and relatively long-lasting.

Yet another purpose of the present invention is that of providing a filter the exclusion of which can also take place by express command of the driver.

Another purpose of the present invention is that of providing a controlled exclusion filtration device of particularly small size also suitable for installation on small vehicles, equipped with a filter that is cheap to make and simple to install and replace.

Another purpose of the present invention is that of providing an automatic and/or manual controlled exclusion filtration device equipped with a suitably selected microporous paper filter capable of holding the particulate present in the exhaust gases of internal combustion engines and in particular of diesel-cycle engines, with particulate of a size no smaller than 0.1 microns.

Another purpose of the present invention is that of making a filter that does not have a substantial load loss for the gases that cross it and therefore that does not cause significant counterpressures at the exhaust.

These and other purposes according to the present invention are accomplished by a controlled exclusion filtration device according to what is outlined in claim 1.

Further characteristics of the invention form the object of the dependent claims.

The filtration device for particulate present in exhaust gases of internal combustion engines according to the present invention comprises a tributary pipe that receives the gases from an exhaust unit of a vehicle, a filter connected to the tributary pipe and a controlled motorised valve, suitable for deviating the exhaust gases entering into the filter into the atmosphere when a predetermined maximum temperature has been reached.

The characteristics and advantages of a controlled exclusion filtration device according to the present invention shall become clearer from the following description, given as an example and not for limiting purposes, referring to the attached schematic drawings, in which:

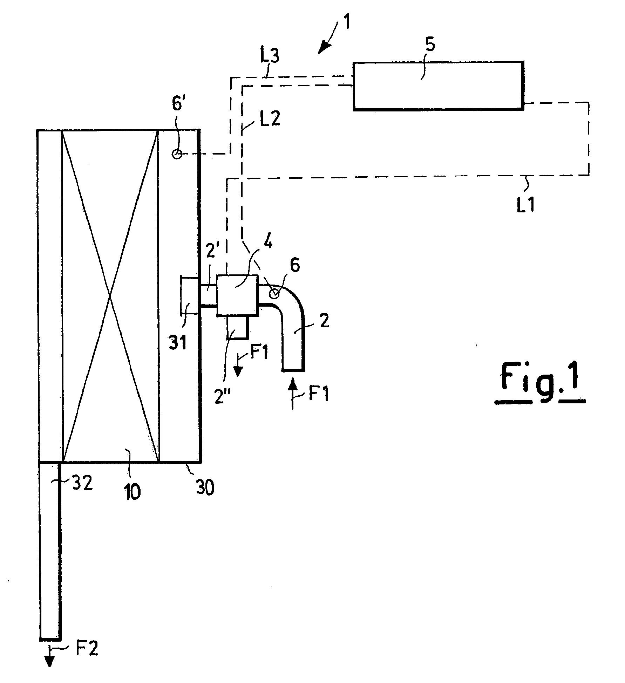

figure 1 is a schematic view of the filtration device according to the invention;
figures 2a and 2b are perspective views of the filter incorporated in the device according to the invention;
figure 3 is a schematic side view of a detail of the filter of figures 2a and 2b;
figures 4a-4c are views of details of the filter of the device according to the invention;
figure 5 is a schematic front view of the filter of figure 2a;
figure 6 is a schematic front view of the filter of figure 5 housed in a container.

A filtration device 1 for particulate present in the exhaust gases of internal combustion engines receives the gases from an exhaust unit of a vehicle through a tributary pipe generically indicated with 2.

The filtration device 1 comprises a filter 10 connected to the tributary pipe 2 and inserted into a container 30 equipped with an inlet 31 and an exhaust pipe 32.

The tributary pipe 2 preferably splits into a first branch 2' connected to the inlet of the filter 10 and a second direct exhaust branch 2".

The purpose of such branching is to allow the direct exhaust of the gas flow F1 coming from the exhaust engine thanks to a controlled valve 4, preferably of the motorised three-way type arranged near to the branching.

The deviation of the gases F1 to be discharged without filtering is, therefore, preferably carried out through a motorised three-way valve 4 the state of which is indicated to the driver of the vehicle together with the temperature and counterpressure values.

Such a valve 4 is actuated through a motorisation thereof and actuated upon the command of a control device 5 through a line L1.

The control device 5 receives data from a temperature sensor 6 inserted in the tributary pipe, upstream of the valve 4 connected through line L2.

In such a way it is possible to carry out an automated deviation that is defined by the user of the gases to be subjected to filtration.

According to the operating speed of the engine and consequently the temperature of the exhaust gases, the temperature sensor shall send information that will allow the control device 5 to actuate the valve 4 once a predetermined threshold temperature, generally between 150°C and 180°C, has been exceeded.

Such a way of operating is particularly advantageous since, in low-speed conditions of the vehicle, the filter manages to hold 99% of the carbon particulate, whereas, in high operating speed conditions, the filter is automatically shut off to avoid damage, to be once again reinserted when the operating speed conditions take the temperature of the exhaust gases below the predetermined threshold value.

Such an effect can be increased thanks to the use of a large filtering surface of around 0.2 m²/kw, which allows a large filtration bed to be provided that takes care of holding the aforementioned particulate in a very efficient way.

As the temperature of the exhaust gases lowers to within the established limits, the filter is once again automatically reinserted.

The filtration device according to its embodiments can also have at least one pressure sensor 6' connected to the control device 5 through a third line L3, and inserted at the inlet of the filter 10 in its container or upstream of the filter 10 at the inlet 31.

In such a way it is possible to carry out a detection of the instantaneous counterpressure of the filter 10: when a predetermined value has been exceeded, the filter is excluded through the valve 4 to then be once again reinserted when the counterpressure value goes back within the predetermined limits.

There shall be a moment at which due to its progressive clogging the filter shall be almost constantly excluded: the driver, noticing the continuous state of exclusion, must take care of its replacement.

The control device 5 is, indeed, set up to automatically or, if so desired, voluntarily actuate the valve 4 so as to deviate the gases F1 directly to the exhaust in the case of excessive counterpressure.

Advantageously, the control device 5 can also be connected to a display inside the driving compartment to inform the user as to the operating parameters of the device (like operation or exclusion, gas temperature values, counterpressure, state of clogging of the filtering element).

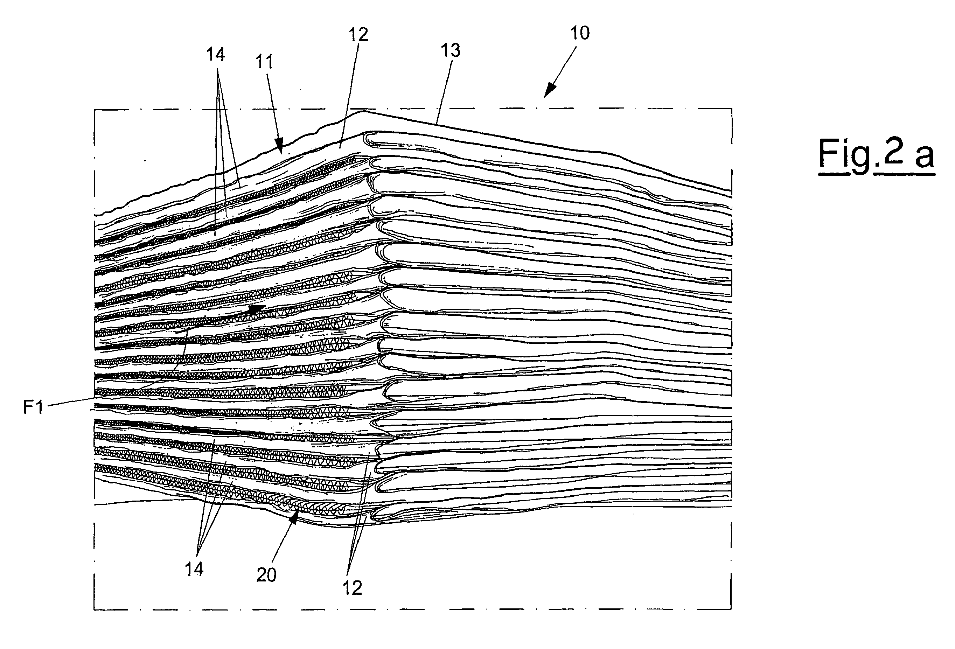

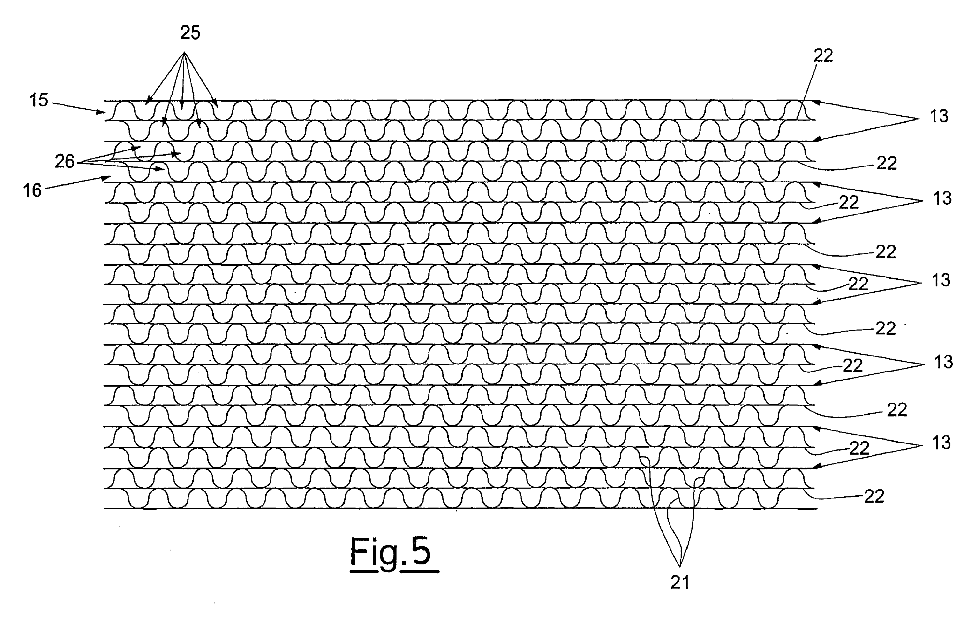

With reference to figures 2a to 6, the paper filter 10 suitable for filtering the particulate present in the exhaust gases is illustrated.

The filter 10 comprises a filtering element 11 made from a suitable microporous paper folded into a "Greek fret", i.e. having a plurality of layers 13 arranged substantially parallel, joined through folds 14 of the filtering paper itself.

Based upon research and experiments, the Applicant has, indeed, been able to discover that microporous paper in the invention constitutes a very efficient filtering means for the exhaust gases of diesel engines.

Moreover, using paper with a filtration efficiency of more than 99% for particles of around 1 micron, and a suitable specific area expressed according to the power of the vehicle (m²/kw), it can be seen that the filter can hold very large volumes of gas before having substantial load losses.

This is due to the filtering power of the layer of particulate that deposits on the paper that in turn acts as a filter preventing the finer particles from blocking the micropores of the paper.

Contrary to a drawback heavily suffered and widely indicated in literature, the Applicant has been able to discover that it is possible to make microporous paper suitable for withstanding temperatures of around 150°C and beyond without any problem.

The layers 13 are separated from each other through interposition of a spacer 20 made from corrugated or folded paper of a rigidity such as to prevent the layers 13 collapsing.

In such a way it is possible to have a large surface of filtering paper in a limited space thus making a filter having a high surface volume.

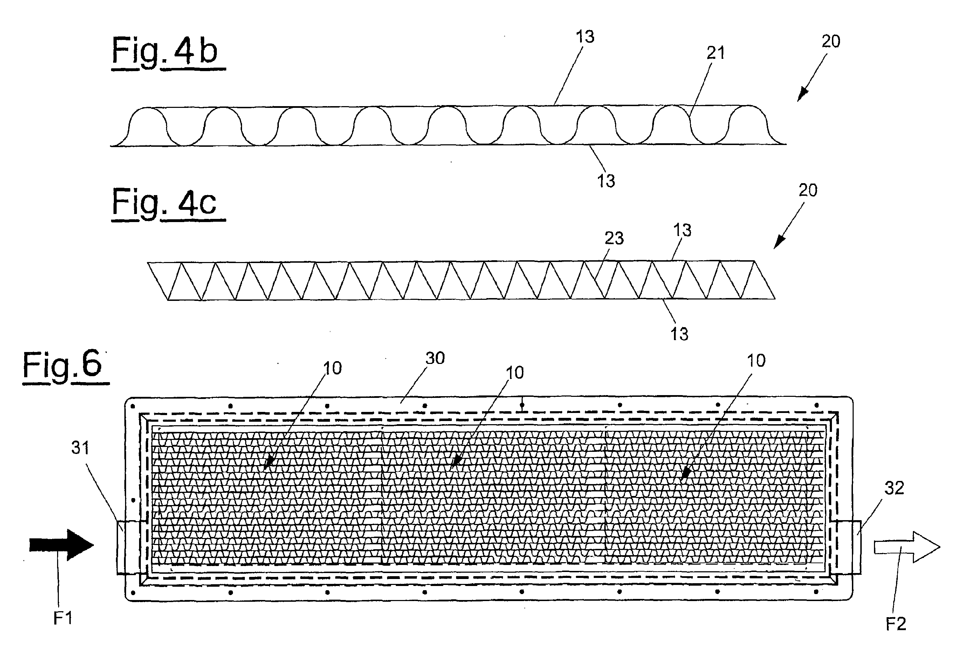

With particular reference to figure 4b, such a spacer 20 is for example made through corrugated paper 21.

In order to give greater strength and to allow the filter to be made in an automated way it is preferable to use a corrugated paper 21 glued along the generatrices to a sheet of flat paper or support covers 22 existing in normal production; such an assembly is indicated hereafter as "corrugated paper with a cover".

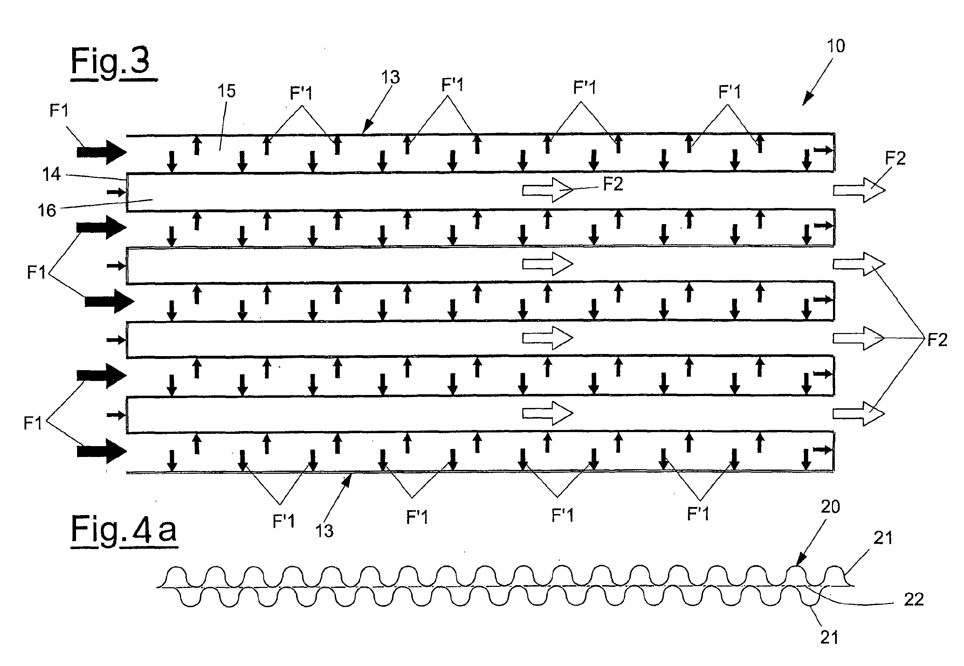

To make the spacer 20 such corrugated paper with a cover is arranged, as indicated in figure 4a, with two of such sheets of corrugated paper with a cover joining together the covers 22 to form a spacer 20 of the desired thickness and constituency that has surfaces that are corrugated both above and below.

Advantageously, the spacer 20 can be made in one of the embodiments described here or even as illustrated in figure 4c, through folded paper 23.

The purpose of such a spacer 20 is to prevent the layers 13 from collapsing apart; indeed, the spacer 20, working under compression, supports the aforementioned layers 13 of filtering paper keeping them substantially at the same distance thus ensuring uniformity of filtration.

The essential condition for operation is, indeed, that the individual layers 13 of the filtering element remain in position, in other words parallel and equidistant.

In the absence of the spacers 20, as the clogging of the filter and therefore the load loss that the gas undergoes in crossing it increases, the layers 13 between which the filtered gas circulates would tend to move towards each other and at the moment when they touch the filter would become blocked and would cease to function.

Such a spacer 20, in whatever embodiment, is arranged with the generatrices of the waves or with the folds parallel to the flow of the gas defined by the arrows F1 in figures 2a and 3.

Such an arrangement of the layers 13 and of the spacers 20 defines an alternating series of "dirty" cells 15 in which the gas to be filtered circulates, which is sent to the filtering paper through pipes 25 delimited by the corrugations 21 or folds 23 and by the filtering layers 13.

Such cells 15 of gas to be filtered indicated with the arrows F1 alternate in the Greek fret arrangement of the filter with "clean" cells 16 in which the filtered gas circulates, in turn indicated with the arrows F2.

Indeed, the gas is filtered in the passage through such layers 13 according to the direction and way defined by the arrows F'1 and, although in a small part, also at the front end of the filtering element 11 through the folds 14.

The gas enters into the cells 16 of the filtered gas and is released into the atmosphere through pipes 26 in turn delimited by the corrugations 21 or folds 23 and by adjacent layers 13.

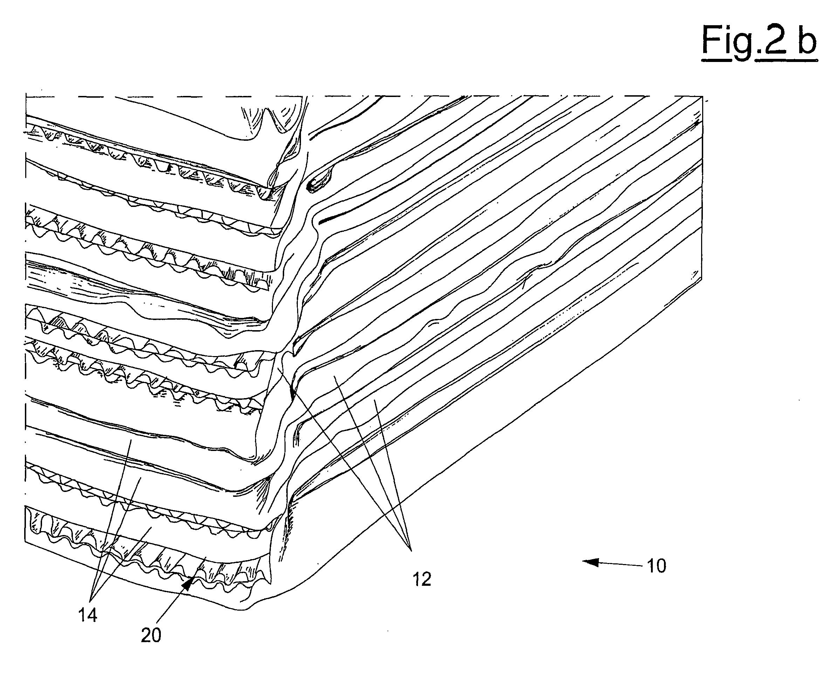

With particular reference to figure 2b, the lateral closing that is carried out by folding the edges 12 obtained thanks to the excess microporous filter paper is illustrated.

The spacer is, indeed, kept about 20 mm per side shorter than the layers 13 and the filter paper is possibly wetted with glue along such edges 12 that fold upwards or downwards so as to obtain an imbrication.

In such a way there is no communication between the cells in which the gas to be filtered circulates, which are at a greater pressure, and those in which the filtered gas circulates at a low pressure.

As illustrated in figure 6, the filter 10 according to the preferred embodiment is foreseen to be housed, individually or in a plurality of replaceable elements, in a container 30 that is easy to assemble on a vehicle.

Special care must be taken so that the condensation that forms at ignition, particularly during the winter, does not reach the paper filtering means; for such a purpose a suitable by-pass, selected for example through an intercept valve that is automatic or controlled by the driver can be made upstream of the inlet pipe 31, or else a suitable condensation separator normally available on the market can be mounted.

The filter can also be equipped with a sensor that warns the driver that the filter must be replaced soon.

The filtration device according to the invention achieves the predetermined purposes and in particular:
- device suitable for holding the particulate;
- paper-based filter, of very small size but such as to allow the user advantageously long use between replacements;
- the device causes extremely limited counterpressures at the exhaust of the engine;
- the device is of a suitable size to allow application both onto commercial vehicles, and onto private vehicles;
- a gap between replacements that can be extended thanks to the possibility of excluding the filter in certain conditions for example when the vehicle travels on out-of-town roads;
- possibility of disposal of the used filter and of its particulate content without problems, for example through incineration, thanks to the use of mainly cellulose-based materials.
- low costs both of the complete device and of its components such as the replaceable filtering element and its container.

## Claims

1. Filtration device (1) for particulate present in exhaust gases of internal combustion engines, suitable for receiving the gases from an exhaust unit of a vehicle through a tributary pipe (2), comprising a filter (10) connected to the tributary pipe (2), said tributary pipe (2) splits into a first branch (2') connected to the filter (10) and into a second direct exhaust branch (2") of the gases directed to the atmosphere, the device (1) being **characterised in that** an automatically actuated motorised valve (4), is arranged near to the branching zone of the branches (2', 2") for deviating the exhaust gases entering into the filter (10) to the atmosphere without filtering them, when a predetermined temperature of the exhaust gases and/or a counterpressure inside the filter (10) is detected respectively by means of an appropriate temperature sensor (6) and/or pressure sensor (6'), **in that** said filter (10) is made of microporous paper, and **in that** said valve (4) is actuated by a control device (5) once a predetermined temperature between 150°C and 180°C is exceeded.

2. Filtration device (1) according to claim 1, wherein said controlled valve (4) is a three-way valve actuated through a motorisation and automatically or manually activated upon the command of a control device (5).

3. Filtration device (1) according to claim 2, wherein said control device (5) is provided to receive data from the temperature sensor (6) inserted in the tributary pipe (2).

4. Filtration device (1) according to any one of the previous claims, wherein said device has at least one pressure sensor (6') connected to the control device (5), and inserted at the inlet of the filter (10), to detect the counterpressure.

5. Filtration device (1) according to claim 1, wherein said filter (10) comprises a filtering element (11) made in the form of a sheet folded in the form of a "Greek fret", having a plurality of filtering layers (13) arranged substantially parallel joined together through folds (14), said layers (13) being separated and kept equidistant through the interposition of spacers (20) of a rigidity such as to prevent the layers (13) collapsing.

6. Filtration device (1) according to claim 5, wherein said spacers (20) each comprise at least one sheet of corrugated paper arranged with the generatrices of the corrugations parallel to the direction (F1) of the flow of gases entering into the filtering element (11).

7. Filtration device (1) according to claim -6 5, wherein said spacer (20) consists of at least a pair of sheets of corrugated paper with a cover each consisting of corrugated paper (21) glued along the generatrices to a cover (22) in the form of a flat sheet, said sheets of corrugated paper with a cover being arranged back-to-back through the covers.

8. Filtration device (1) according to claim 5, wherein said spacer (20) comprises folded paper (23) arranged with the generatrices of the folds parallel to the direction (F1) of the flow of gases entering into the filtering element (11).

9. Filtration device (1) according to claim 5, wherein said filtering element (11) has foldable and possibly glueable edges (12) at the side so as to make an imbrication to close the filter at the side.

## Patentansprüche

1. Filtervorrichtung (1) für Partikel, die in Abgasen von Verbrennungskraftmaschinen vorhanden sind, dafür ausgelegt, die Gase von einer Abgaseinheit eines Fahrzeuges über eine Zuleitung (2) zu empfangen, beinhaltend einen Filter (10), der mit der Zuleitung (2) verbunden ist, wobei die Zuleitung (2) aufgezweigt wird in einen ersten Zweig (2'), der mit dem Filter (10) verbunden ist, und in einen zweiten direkten Abgaszweig (2") zur direkten Ausleitung der Gase in die Atmosphäre, wobei die Vorrichtung (1) **dadurch gekennzeichnet ist, dass** ein automatisch betätigtes motorbetriebenes Ventil (4) in der Nähe des Verzweigungsbereiches der Zweige (2', 2") angeordnet ist, um die in den Filter (10) eintretenden Gase in die Atmosphäre auszuleiten, ohne sie zu filtern, wenn eine vorbestimmte Temperatur der Abgase und/oder ein Gegendruck in dem Filter (10) durch einen geeigneten Temperatursensor (6) und/oder einen Drucksensor (6') erfasst wird,
dass der Filter (10) aus mikroporösem Papier besteht, und
dass das Ventil (4) durch eine Steuereinrichtung (5) betätigt wird, sobald eine vorgegebene Temperatur zwischen 150° und 180° überschritten wird.

2. Filtervorrichtung (1) nach Anspruch 1, worin das angesteuerte Ventil (4) ein über einen motorischen Antrieb betätigtes Drei-Wege-Ventil ist und automatisch oder manuell auf Befehl der Steuereinrichtung (5) aktiviert wird.

3. Filtervorrichtung (1) nach Anspruch 2, worin die Steuereinrichtung (5) dafür ausgelegt ist, Daten von dem Temperatursensor (6) zu empfangen, der in der Zuleitung (2) eingefügt ist.

4. Filtervorrichtung (1) nach einem der vorhergehenden Ansprüche, worin die genannte Vorrichtung mindestens einen Drucksensor (6') aufweist, der mit der Steuereinrichtung (5) verbunden ist und am Einlass des Filters (10) angeordnet ist, um den Gegendruck zu erfassen.

5. Filtervorrichtung (1) nach Anspruch 1, worin der Filter (10) ein Filterelement (11) beinhaltet, das in Form eines Blattes ausgebildet ist, das "mäanderförmig" gefaltet ist, und das mehrere Filterschichten (13) aufweist, die im Wesentlichen parallel angeordnet und durch Faltungen (14) miteinander verbunden sind, wobei die Schichten (13) durch das Zwischenlegen von Abstandhaltern (20) getrennt und in gleichem Abstand voneinander gehalten werden, deren Steifigkeit so gewählt ist, dass das Kollabieren der Schichten (13) verhindert wird.

6. Filtervorrichtung (1) nach Anspruch 5, worin die Abstandhalter (20) jeweils mindestens ein Blatt Wellenpapier beinhalten, das mit den Erzeugenden der Wellen parallel zur Strömungsrichtung (F1) der in das Filterelement (11) eintretenden Gase angeordnet ist.

7. Filtervorrichtung (1) nach Anspruch 5, worin der Abstandhalter (20) aus mindestens einem Paar von Blättern aus Wellenpapier mit einem Deckenpapier besteht, die ihrerseits aus einem Wellenpapier (21) bestehen, das entlang den Wellenerzeugenden an ein Deckenpapier (22) in Form eines ebenen Blattes geklebt ist, wobei die genannten Blätter aus Wellenpapier mit einem Deckenpapier so angeordnet sind, dass sie Rücken an Rücken an den Deckenpapieren miteinander verbunden sind.

8. Filtervorrichtung (1) nach Anspruch 5, worin der Abstandhalter (20) gefaltetes Papier (23) beinhaltet, das mit den Erzeugenden der Faltungen parallel zu der Strömungsrichtung (F1) der in das Filterelement (11) eintretenden Gase angeordnet ist.

9. Filtervorrichtung (1) nach Anspruch 5, worin das Filterelement (11) faltbare und möglichst klebbare Kanten (12) an der Seite aufweist, um eine ziegelartige Überlagerung zum Schließen des Filters an der Seite zu bilden.

## Revendications

1. Un dispositif de filtration (1) pour les particules présentes dans les gaz d'échappement des moteurs à combustion interne, adapté pour recevoir les gaz provenant d'un système d'échappement d'un véhicule au travers d'un conduit affluent (2), comprenant un filtre (10) raccordé au conduit affluent (2), ledit conduit affluent (2) se divisant en une première branche (2') raccordée au filtre (10) et en une deuxième branche (2") d'échappement direct des gaz dans l'atmosphère, le dispositif (1) étant **caractérisé en ce qu'**une vanne motorisée à actionnement automatique (4) est disposée à proximité de la zone d'embranchement des branches (2', 2") pour dévier les gaz d'échappement entrant dans le filtre (10) dans l'atmosphère sans les filtrer, quand une température prédéfinie des gaz d'échappement et/ou une contre-pression à l'intérieur du filtre (10) est détectée par l'intermédiaire, respectivement, d'un capteur de température (6) approprié et/ou d'un capteur de pression (6') approprié, **en ce que** ledit filtre (10) est réalisé en papier microporeux, et **en ce que** ladite vanne (4) est actionnée par un dispositif de contrôle (5) quand une température prédéfinie comprise entre 150° C et 180° C est dépassée.

2. Le dispositif de filtration (1) selon la revendication 1, **caractérisé en ce que** ladite vanne commandée (4) est une vanne à 3 voies actionnée par l'intermédiaire d'une motorisation et activée automatiquement ou manuellement sur commande du dispositif de contrôle (5).

3. Le dispositif de filtration (1) selon la revendication 2, **caractérisé en ce que** ledit dispositif de contrôle (5) est destiné à recevoir des données en provenance du capteur de température (6) inséré dans le conduit affluent (2).

4. Le dispositif de filtration (1) selon l'une quelconque des revendications précédentes, **caractérisé en ce que** ledit dispositif comprend au moins un capteur de pression (6') relié au dispositif de contrôle (5), et inséré au niveau de l'entrée du filtre (10), pour détecter la contre-pression.

5. Le dispositif de filtration (1) selon la revendication 1, **caractérisé en ce que** ledit filtre (10) comprend un élément filtrant (11) consistant en une feuille pliée sous la forme d'une « grecque », ayant une pluralité de couches filtrantes (13) disposées essentiellement parallèles et unies ensemble par l'intermédiaire de plis (14), lesdites couches (13) étant séparées et maintenues équidistantes par interposition de pièces d'écartement (20) d'une rigidité telle à empêcher l'affaissement des couches (13) elles-mêmes.

6. Le dispositif de filtration (1) selon la revendication 5, **caractérisé en ce que** lesdites pièces d'écartement (20) comprennent chacune au moins une feuille de papier ondulé disposée avec les génératrices des ondulations parallèles à la direction (F1) du flux de gaz entrant dans l'élément filtrant (11).

7. Le dispositif de filtration (1) selon la revendication 5, **caractérisé en ce que** ladite pièce d'écartement (20) consiste en au moins une paire de feuilles de papier ondulé avec une couverture consistant, chacune, en du papier ondulé (21) collé le long des génératrices sur une couverture (22) réalisée sous la forme d'une feuille plate, lesdites feuilles de papier ondulé avec une couverture étant disposées dos à dos au niveau des couvertures.

8. Le dispositif de filtration (1) selon la revendication 5, **caractérisé en ce que** ladite pièce d'écartement (20) comprend un papier plié (23) disposé avec les génératrices des plis parallèles à la direction (F1) du flux de gaz entrant dans l'élément filtrant (11).

9. Le dispositif de filtration (1) selon la revendication 5, **caractérisé en ce que** ledit élément filtrant (11) présente latéralement des bords (12) pouvant être pliés et collés de manière à réaliser une imbrication pour fermer latéralement le filtre.
